# EUROPEAN PATENT SPECIFICATION

(11) **EP 3 710 297 B1**
(45) Date of publication and mention of the grant of the patent: **29.01.2025**
(21) Application number: 18800618.3
(22) Date of filing: 09.11.2018
(51) Int. Cl.: B60K 1/04, B62K 11/06, B62K 11/10

(54) **BATTERY MODULE HOUSING AND VEHICLE**
GEHÄUSE FÜR BATTERIEMODUL UND FAHRZEUG
LOGEMENT DE MODULE DE BATTERIE ET VÉHICULE

(30) Priority: 17.11.2017 GB 201719049
(43) Date of publication of application: 23.09.2020
(73) Proprietor: Jaguar Land Rover Limited, Coventry, Warwickshire CV3 4LF (GB)
(72) Inventor: TRUMAN, Mark, Coventry Warwickshire CV3 4LF (GB)
(74) Representative: Jaguar Land Rover Patents Department
(86) International application number: PCT/EP2018/080731
(87) International publication number: WO 2019/096680

(56) References cited:
- WO-A1-01/89916
- WO-A1-2012/104592
- WO-A1-2017/003505
- US-A1- 2008 196 957
- US-A1- 2010 133 030
- US-A1- 2011 042 916

## Description

### TECHNICAL FIELD

The present invention relates to a battery module housing and particularly, but not exclusively, to a battery module housing for an electric vehicle. Aspects of the invention relate to a battery module housing and to a vehicle.

### BACKGROUND

Electrification of vehicles is becoming increasingly common and may take the form of battery electric vehicles, powered exclusively by electrical energy stored in the vehicle, or hybrid vehicles, which are powered by a combination of electrical energy stored in the vehicle and an internal combustion engine. In both cases, these vehicles are, at least in part, propelled using electrical energy and so may be referred to as electric vehicles.

Electrical energy may be stored in the vehicle using one or more voltaic cells, or additionally or alternatively may be stored using one or more super capacitors. Such electrical energy storage means are referred to as a battery or battery module. The weight and complexity of such a battery however, has a strong influence on the overall cost and range of the vehicle, and due to the nature of storing electrical energy at voltages exceeding the once typical 12V, it is necessary to balance the need to protect the battery from damage in use, whilst not becoming excessively heavy or complicated.

One such way to protect the battery is to encase it in a housing means, such as a battery module housing, in which the electrical energy storage means for powering the vehicle may be received. The battery housing means must typically be able to protect the electrical energy storage means housed therein from contact with dirt or water from the road or whatever surface the vehicle is being used on. The housing must also retain the energy storage means therein in a way as to protect and support the energy storage means, to mitigate against any damage that may otherwise be caused by an impact to the housing during vehicle operation. Typically the battery module housing, once assembled, is fitted to the vehicle, secured thereto via dedicated fixing points provided on the vehicle body, frame and/or chassis.

Furthermore, it is known to provide vehicles with a separate chassis or frame and body. As vehicles are becoming increasingly more complicated and sophisticated they often require a significant number of component parts, such as suspension components, seating components, instrumentation and cooling systems that must all be provided means for securing them to the body and/or the chassis or frame. As such, vehicles with greater parts complexity are typically more time consuming and expensive to manufacture and maintain and require a number of different raw materials and tooling for manufacture and assembly, which can lead to an undesirable increase in vehicle weight which has an adverse affect on vehicle efficiency.

A pertinent battery module is known from WO 2012/104592 A1.

It is an object of embodiments of the invention to at least mitigate one or more of the problems of the prior art.

### SUMMARY OF THE INVENTION

Aspects and embodiments of the invention provide a battery module housing and a vehicle.

According to the invention, there is provided a battery module housing for an electric vehicle, the battery module housing comprising:
a monocoque; and
a shelving matrix within the monocoque, the shelving matrix is arranged to receive one or more energy storage means, and
   wherein the monocoque is a structural component of the electric vehicle characterised in that:
   the monocoque (204) comprises a rear connection means (205) for receiving a rear suspension assembly and a front connection means (203) for receiving a front suspension assembly;
   the rear suspension assembly comprises a rear swing arm (112) and a spring-damper assembly arranged between the rear swing arm (112) and the monocoque (204), and wherein the spring-damper assembly is configured to control the movement of the swing arm (112) relative to the battery module housing (200); and
the front suspension assembly comprises a front swing arm (110) and a spring-damper assembly arranged between the front swing arm (110) and the monocoque (204), and wherein the spring-damper assembly is configured to control the movement of the front suspension assembly relative to the battery module housing (200)..

According to another aspect of the invention, there is provided a battery module housing for an electric vehicle, the battery module housing comprising:
a monocoque defining an interior volume therein; and
a shelving matrix arranged to receive one or more energy storage means and be accommodated within the interior volume of the monocoque, and
wherein the battery module housing defines at least one hard-point arranged to support a suspension assembly configured to support at least a part of the total vehicle mass in use.

In an example, the battery module housing is load bearing and is arranged to support the load of the energy storage means and at least one suspension component of the vehicle, the suspension component being attached to the battery module housing via the hard-point. In an example, the battery module housing is further arranged to support the load of at least one seat for supporting a vehicle occupant. In an example, the suspension assembly comprises at least one of: a wheel; a continuous track assembly; or ski. In an example, the suspension assembly comprises at least one of: a swing arm, pivotably attached to said hard-point via a pivot; a steering mechanism, configured to permit the user to change the direction of travel of the vehicle in use; a head-stock, arranged to provide a pivotable attachment for a steering mechanism; a telescopic fork assembly pivotably attached to the hard-point via the headstock; or braking means, arranged to apply a braking force between the vehicle and the wheel or continuous track in use.

Advantageously, a single structure or component, namely the battery module housing, can be used for multiple functions. The battery module housing may advantageously function to house and optionally support and protect energy storage means, such as one or more voltaic cells and/or super capacitors, whilst also functioning as a major structural component of the electric vehicle. This advantageously reduces parts complexity and therefore costs and also keeps overall mass of an electric vehicle incorporating the battery module housing to a minimum, leading to more efficient operation of the electric vehicle. As used herein, the term shelving matrix means a component comprising one or more shelves for receiving said energy storage means thereon. The shelving matrix may comprise only a single shelf or may comprise multiple shelves. The shelving matrix may comprise one or more partitions that divide the one or more shelves into sections. The one or more partitions may be substantially perpendicular to said one or more shelves. In other embodiments, the shelving matrix may comprise no partitions.

In some embodiments, the monocoque is one or both of a chassis and a body of the electric vehicle. Advantageously, this means that a single structure or component, namely, the battery module housing, can function both to house and optionally support and protect the energy storage means, such as one or more cells, whilst also functioning as a major structural component of the electric vehicle. In use, such a battery module housing may advantageously bear the overall weight of the electric vehicle and, may additionally bear the weight of any vehicle occupant(s). This advantageously reduces manufacturing materials and therefore costs and also reduces overall mass of the electric vehicle, leading to more efficient vehicle operation.

In some embodiments, the front suspension assembly comprises a steering assembly and the battery module housing comprises a front through aperture defining a headtube through and about which a steering mechanism of the steering assembly operates.

In some embodiments, said monocoque comprises:
a body component; and
a removable cover plate.

The body component defines a chamber therein, for receipt of the shelving matrix and energy storage means. The cover plate may close an opening in the body component to close the chamber. The cover plate may comprise a sealing member arranged to seal the energy storage means into the chamber in use and prevent ingress of dirt or water from the road or other surface on which the vehicle is being operated. Optionally, said body component is a unitary component, closeable by said removable cover plate. In some embodiments, said body component may be a unitary, integrally formed component. The body component may, in some embodiments, comprise a composite material, or may comprise a casting of a metal or metal alloy.

Advantageously, a removable cover plate provides quick and easy access to an internal part, or chamber, of the monocoque. This means that energy storage means, such as one or more cells or super capacitors, can quickly and easily be inserted, removed or replaced from the shelving matrix within the monocoque. This advantageously reduces assembly and maintenance time for an electric vehicle incorporating the battery module housing.

Optionally, the removable cover plate is positioned at a side surface of the monocoque. Optionally, said the body component and the removable cover plate are arranged to fit together at a top of the monocoque, when in use as part of an electric vehicle, distal from a contact point between a wheel, continuous track or ski of the vehicle and a ground surface on which the vehicle is standing. Alternatively, when the monocoque is closed by said removable cover plate, the body component and the removable cover plate are arranged to fit together at a rear of the monocoque. In this sense, rear surface means a surface of the monocoque, when in use as part of an electric vehicle, distal from a front surface arranged to face in the direction of normal travel of the electric vehicle. The cover plate may be releasably fixable to the unitary, integrally formed body component. Advantageously, by providing the removable cover plate at a top or rear surface of the monocoque, an internal part or chamber of the monocoque can easily be accessed.

In some embodiments, the removable cover plate comprises at least one busbar for providing an electrical terminal for said energy storage means. The at least one busbar may be a metallic strip or bar. Advantageously, the at least one busbar can carry substantial electric current over a relatively short distance and serves to keep losses due to electrical resistance to a minimum. By incorporating the one or more busbars into the removable cover plate, pressure can be applied to ensure a good electrical connection between the busbars and the energy storage means, such as one or more cells received by the shelving matrix. In some embodiments, the one or more busbars comprise a flat strip, a solid bar or rod, a hollow tube or a braided wire. Advantageously, such shapes allow for more efficient heat dissipation, due to a high ratio of surface area to cross sectional area. In some embodiments, the busbars are supported on an insulator or are completely surrounded by an insulator. In some embodiments, the cover plate comprises an insulator supporting an electrical connector, electrically coupled to the busbar, and arranged to provide means for connecting the electrical storage means to at least one of an electrical charging socket, an inverter, or an electric traction motor.

In some embodiments, said shelving matrix comprises at least one shelf for providing a partition to define a compartment either side thereof, within the monocoque. The at least one shelf, within the monocoque, may extend substantially from a front end of the monocoque to a rear end of the monocoque, wherein the front end and the rear end are aligned along a longitudinal axis of the monocoque. Advantageously, this enables an internal part or chamber of the monocoque to be divided into chamber and provides support means for the energy storage means, such as one or more cells, received by the shelving matrix.

Optionally, the battery module housing comprises a clearance zone at an end of each at least one shelf. Said clearance zone may be a gap at an edge or an end of the at least one shelf for receiving a part of a energy storage means, such as a string of cells. Advantageously, a clearance zone allows the battery module housing to receive a string of cells, which cells may be distributed throughout a plurality of compartments within the battery module, without breaking connection of the string of cells. The cells may completely occupy the plurality of compartments within the battery module. Alternatively, the cells may occupy only some of the plurality of compartments within the battery module.

In some embodiments, said shelving matrix is integrally formed with said monocoque.

In some embodiments, said shelving matrix is mechanically attached to said monocoque.

In some embodiments, said shelving matrix may be bolted to said monocoque.

In some embodiments, the battery module housing comprises at least one cooling channel. Said at least one cooling channel advantageously provides means for mitigating or preventing overheating. This may be especially advantageous in extended and/or heavy operating conditions, and especially where the vehicle is being operated in areas of relatively high ambient temperatures.

Optionally, said at least cooling channel is integral with said monocoque. Optionally, said at least one cooling channel is integral within said shelving matrix. The at least one cooling channel may comprise a cavity formed in a shelf of said shelving matrix. Advantageously, this prevents the need for additional materials or components to provide a cooling means to mitigate or prevent overheating.

Optionally, said monocoque comprises at least one aperture for providing fluid communication between said at least one cooling channel and an environment external the monocoque.

Optionally, a first of said at least one aperture is arranged at a front of the monocoque and a second of said at least one aperture is arranged at a rear of the monocoque. The front of the monocoque and the rear of the monocoque may be aligned along a longitudinal axis. Advantageously, this allows air to flow into and out of said at least one cooling channel without need to provide additional means to exhaust air out the battery module. Advantageously, this encourages airflow through said at least one cooling channel when the vehicle is in motion substantially in a direction aligned with, along, or coaxial with said longitudinal axis.

Optionally, the battery module housing further comprises a battery cooling pack having a heat exchanger supported on an external surface of the monocoque and arranged to be in fluid communication with the at least one cooling channel and configured to cool the energy storage means in use. In an example, the battery cooling pack comprises a heat exchanger, containing a coolant in fluid communication with the at least one cooling channel; and a fan arranged to force air through the heat exchanger to facilitate the removal of heat from the coolant, and wherein the cooling pack is mounted to exterior formations provided on the monocoque and those exterior formations form at least a part of a cowling around the heat exchanger and the fan, the cowling being arranged to duct air from the fan through the heat exchanger.

In the case of the front and rear suspension assemblies, they may comprise any of: a wheel; a continuous track; or a ski, and further comprise suitable connection means for connecting the suspension assembly thereto. The front connection means may additionally or alternatively be arranged to receive a vehicle steering mechanism. The vehicle steering mechanism may comprise a headstock or headtube. The front connection means may be at a front of the monocoque and the rear connection means may be at a rear of the monocoque. The front of the monocoque and the rear of the monocoque may be aligned along a longitudinal axis. The rear connection means may comprise an aperture in the monocoque. The front connection means may comprise an aperture in the monocoque. Optionally, said rear suspension assembly comprises a rear swing arm pivotably connected to the monocoque via mounting means comprising a swing arm bearing. Optionally, the front suspension assembly comprises a front swing arm. The front swing arm may comprise a hub centre steering system. Advantageously, by connecting one or both of the front and rear suspension assemblies to the battery module housing through connection means in the monocoque, the monocoque can function as a pivot point for each of the suspension assemblies. In some embodiments, one or both of the front and rear swing arms comprise a composite material, such as carbon fibre reinforced resin. In some embodiments, one or both of the front and rear swing arms comprise a metal or metal alloy, such as fabricated aluminium, or an alloy thereof.

In some embodiments, said battery module housing comprises lateral damping control means for providing suspension, when the battery module housing is in use with an electric vehicle, and the vehicle is cornering. Optionally, said lateral damping control means comprises said monocoque being arranged to control lateral flexion. In some embodiments, said being arranged to control lateral flexion comprises the monocoque having one or both of a shape and one or more mechanical properties being tailored to maintain lateral flexion within a desired range of lateral flexion. Advantageously, the battery module housing provides means for controlling and therefore managing lateral damping, advantageously overcoming the requirement for providing a separate component to control lateral damping of the electric vehicle when cornering.

In some embodiments, said monocoque may be formed in any three dimensional shape. Said monocoque may be formed by modular construction. Said monocoque may be adapted to maintain lateral flexion within a desired range of lateral flexion and with pre-defined lateral flexion characteristics, regardless of the shape of the monocoque. Said monocoque may be adapted to withstand a variety of twisting forces, regardless of the shape of said monocoque. Bending and torsional forces will be applied to the monocoque from the front and/or rear suspension assemblies when the vehicle is in use. Resistance to and control of these forces is essential to ensure the vehicle handling characteristics are predictable and reliable.

In some embodiments, said monocoque comprises a composite material. Advantageously, composite materials are lightweight, meaning that an electric vehicle comprising the battery module housing can operate at increased efficiency. Said composite material may be a carbon fibre reinforced resin. Advantageously, a composite material enables the monocoque to act as a heatsink. A composite material also advantageously enables the provision of a lightweight shelving matrix, without compromising on strength. In other embodiments, said monocoque comprises a metal or metal alloy. The metal may be aluminium. In other embodiments, said monocoque comprises both a composite material and a metal or metal alloy.

In some embodiments, said shelving matrix comprises a composite material. Advantageously, composite materials are lightweight, meaning that an electric vehicle comprising the battery module housing can operate at increased efficiency. Said composite material may be a carbon fibre reinforced resin. A composite material also enables the provision of a lightweight shelving matrix, without compromising strength. In other embodiments, said shelving matrix comprises a metal or metal alloy. Advantageously, the material used for the shelving matrix has good thermal conductivity properties to enable the shelving matrix to act as a heatsink to draw heat away from the electrical energy storage means. The metal may be aluminium. In other embodiments, said shelving matrix comprises both a composite material and a metal or metal alloy.

In some embodiments, said battery module housing further comprises an energy storage means. In some embodiments, the energy storage means comprises one or more cells or super capacitors housed within the battery module housing. Optionally, said one or more cells comprises a string of cells. Optionally, said one or more super capacitors comprises a string of super capacitors. Optionally, the energy storage means comprises both a string of cells and a string of super capacitors. In some embodiments, the one or more cells and/or one or more super capacitors occupies substantially all of the battery module housing. In some embodiments, the one or more cells or one or more super capacitors occupies only a part of the battery module housing. In some embodiments, the one or more cells occupy less than 50% of a volume within the battery module housing. In some embodiments, the one or more super capacitors occupy less than 50% of a volume within the battery module housing.

In some embodiments, an internal wall of the monocoque and an edge or edges of the shelving matrix comprise cooperative lugs and detents. Advantageously, this helps to retain said shelving matrix within the monocoque in a desired position.

Optionally, said shelving matrix is retained within said monocoque by means of adhesion. This may be provided by an adhesive material, or by bonding webbing. Alternatively, said shelving matrix is retained within said monocoque by means of one or more soldered or welded joins. Advantageously, this helps to retain said shelving matrix within the monocoque in a desired position.

In some embodiments, one or both of the monocoque and the shelving matrix are manufactured by any one of: bladder moulding, compression moulding, autoclave moulding, mandrel wrapping, wet layup, chopper gun forming, filament winding, pultrusion and resin infusion. In some embodiments, one or both of the monocoque and the shelving matrix are manufactured by 3D printing, such as stereolithography (SLA), selective laser sintering (SLS), fused deposition modelling (FDM), electron beam melting (EMB), selective laser melting (SLM) or digital light processing (DLP).

According to another aspect of the invention, there is provided vehicle comprising the battery module housing as described above. The vehicle may be an electric vehicle or a hybrid electric vehicle. Optionally, said vehicle is a two-wheeled vehicle. Optionally, said two-wheeled vehicle is a motorcycle, such as an electric motorcycle. Optionally, said vehicle is a three or more wheeled vehicle. In some embodiments, said vehicle is a four wheeled vehicle. In some embodiments, said four wheeled vehicle is a car or a quad bike or an all terrain vehicle (ATV). In some embodiments, said vehicle does not comprise wheels. Optionally, said vehicle comprises one or more continuous tracks, such as an elastomeric track or a metal track. Optionally said vehicle comprises one or more skis, snowboards or blades. Advantageously, a vehicle incorporating the battery module housing as above described may benefit from reduced parts complexity due to the battery module housing's ability to perform multiple functions, such as load bearing functions, housing, protecting and supporting a energy storage means and acting as a hard-point for the vehicle suspension.

### BRIEF DESCRIPTION OF THE DRAWINGS

One or more embodiments of the invention will now be described by way of example only, with reference to the accompanying drawings, in which:
Figure 1 shows a perspective view of a vehicle comprising a battery module housing;
Figure 2 shows a perspective view of a schematic diagram of a battery module housing;
Figures 3A and 3B show perspective schematic diagrams of a battery module housing comprising a rear removable cover plate;
Figures 3C and 3D show perspective schematic diagrams of a battery module housing comprising a top removable cover plate;
Figure 3E shows a perspective schematic diagram of a vehicle comprising a battery module housing, the battery module housing comprising a side removable cover plate;
Figure 4 shows a perspective schematic diagram of a battery module housing, with some internal contents visible for illustrative purposes only;
Figure 5 shows a perspective view of a schematic diagram of a battery module housing;
Figure 6 shows a shelving matrix of a battery module housing; and
Figure 7 shows a battery module housing in a preassembled state.

### DETAILED DESCRIPTION

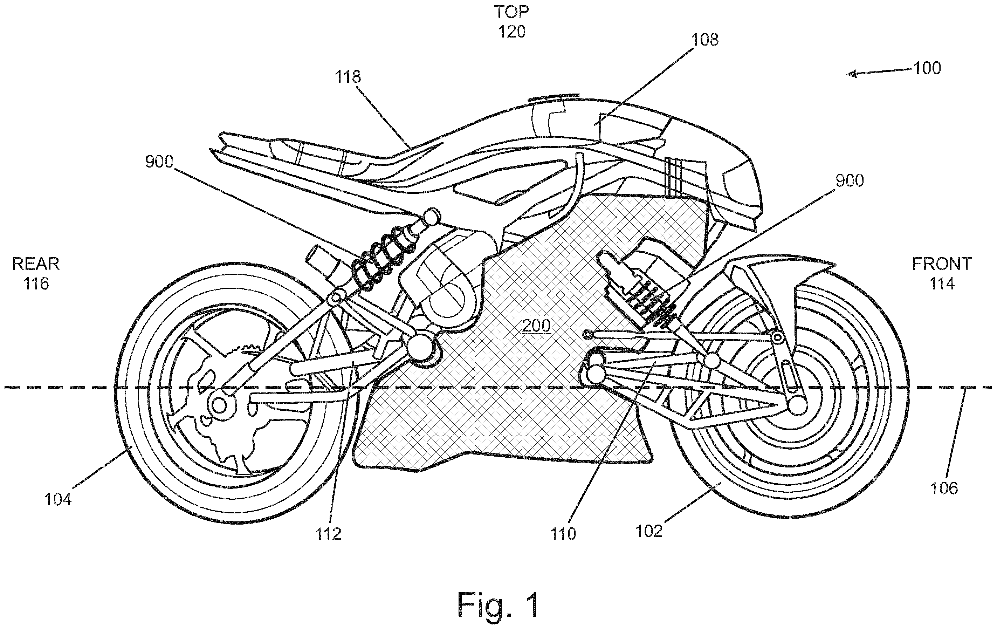

Figure 1 shows a vehicle 100 according to an embodiment of the invention. Vehicle 100 is an electric vehicle and comprises energy storage means (not shown), for storing electrical energy therein for, at least partially, propelling the vehicle 100. In some embodiments, vehicle 100 is a plug in hybrid electric vehicle (PHEV) that may be recharged by connecting vehicle 100 to an external source of electric power. The energy storage means may comprise one or more cells. The cells may be voltaic cells comprising rechargeable batteries such as lithium-ion or lithium-polymer batteries. Other battery chemistries are useful.

Additionally or alternatively, the cells may be super capacitors, or may comprise a combination of super capacitors and rechargeable batteries as may be desirable for a given vehicle application or function. The energy storage means may be charged with electrical power by electrical connection to a charging station external to the vehicle, or may be charged, at least in part by energy recovered by regenerative braking by a vehicle powertrain in use as are both well known in the art. The vehicle is propelled, at least in part, by a vehicle powertrain comprising an electric traction motor powered by the electricity stored in the energy storage means.

In the embodiment illustrated in Figure 1, the vehicle 100 is a two-wheeled vehicle or motorcycle. The vehicle 100 comprises a first wheel 102 at the front of the vehicle and a second wheel 104 at the rear of the vehicle. The two wheels 102, 104 are arranged in alignment along a longitudinal axis 106 of the vehicle 100, such that the first wheel 102 is forward of the second wheel 104. As shown in the Figure, the first wheel 102 is at a front 114 of the vehicle and second wheel 104 is at a rear 116 of the vehicle. The first wheel 102 is used for steering the motorcycle. Other embodiments of motorcycle 100 may be envisaged, such as a tricycle comprising three wheels, with two rear wheels separated along a transverse axis of the vehicle 100 and a single front wheel, or alternatively, two front wheels separated along a transverse axis of the vehicle 100 and a single rear wheel. Indeed, other embodiments of vehicle 100 may be envisaged, such as a quad bike or ATV, which may have four wheels. In other embodiments, vehicle 100 does not comprise wheels and instead comprises some other component for providing ground engaging traction means, such as one or more continuous tracks, which may be an elastomeric track or a metal track. In other embodiments the vehicle comprises one or more skis, snowboards or blades.

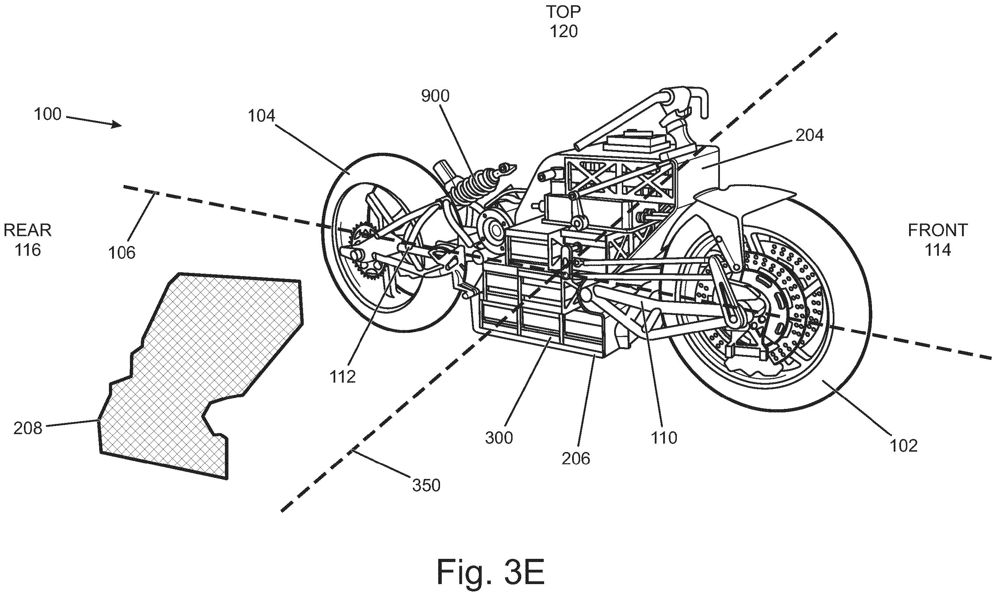

The vehicle 100 comprises a seat unit 108, which provides a surface 118, on which a user may sit during vehicle operation. The seat unit 108, in the example shown, is provided at a top 120 of the vehicle 100. The vehicle 100 also comprises a steering mechanism or steering assembly (not shown) comprising steering input means, such as handlebars (as shown in Figure 3E). The steering assembly may further comprise a telescopic fork or alternatively comprise a hub centre steering assembly (as is shown in the example of Figure 1).

The vehicle 100 comprises a battery module housing 200 from which the wheels 102, 104 are suspended via one or more intermediate components known as suspension assemblies. The suspension assemblies may comprise forks (not shown) or one or more swing arm(s) 110, 112 as is shown in the example of the motorcycle of Figure 1. The wheels 102, 104 and intermediate components for suspending the wheels 102, 104 from the battery module housing 200 define a front suspension assembly and a rear suspension assembly, respectively. In some embodiments, the battery module housing 200 comprises a front connection means comprising a front mounting point or through aperture 203 and a rear connection means comprising a rear mounting point or through aperture 205, for receiving the one or more intermediate components of the front and rear suspension assemblies, respectively. In this way, the battery module housing 200 may provide hard-points for mounting the suspension assemblies to the battery module 200, these hard-points may act as a pivot point of the vehicle 100. In some embodiments, front and rear suspension assemblies comprise front and rear swing arm assemblies, respectively. The front wheel assembly may also comprise a steering assembly, such as a hub centre steering assembly or a headstock or headtube.

In some embodiments, one or both of the front and rear swing arms 110, 112 comprise a composite material, such as carbon fibre reinforced resin. In some embodiments, one or both of the front and rear swing arms 110, 112 comprise a metal or metal alloy. In some embodiments, the front mounting point or through aperture 203 is arranged to receive or provide a headstock or headtube. The battery module housing 200 may comprise any of fixing points, pivots, bearings or inserts, for attaching auxiliary components of the vehicle 100 to the battery module housing 200, such as the headstock or headtube. The bearings or inserts may comprise metal or metal alloy.

The energy storage means (not shown) may be suspended within the battery module housing 200. The battery module housing 200 may also house any one or more of: a motor, which may be an electric traction motor; an inverter; or a battery management system (BMS). The battery module housing 200 may also house other electronic systems of the vehicle 100. The battery module housing 200 is a primary load bearing structural component of the vehicle. In use, the battery module housing 200 is able to bear a combined load of the vehicle and any vehicle occupant(s) and any cargo to be carried. The battery module housing 200 must be able to achieve this without buckling, bending, fracturing or otherwise experiencing mechanical failure. In some embodiments, this is achieved by providing the battery module housing 200 with a stiffness within or exceeding a predefined range, said range being sufficient to support the rider and vehicle weight. In some embodiments, the battery module housing 200 controls flexion and torsion in one or more directions, as will later be described. The battery module housing 200 may prohibit flexion and torsion in one or more directions. Appropriate battery module housing 200 geometry to provide sufficient mechanical properties to at least enable the battery module housing 200 to function as a primary load bearing structural component of the vehicle 100 may be determined using finite element analysis (FEA) or other mathematical and/or computational modelling techniques. In some embodiments, the battery module housing 200 may be formed in any three dimensional shape. The appropriate mechanical properties as above described may be obtained by other means, such as by appropriate material selection and treatments.

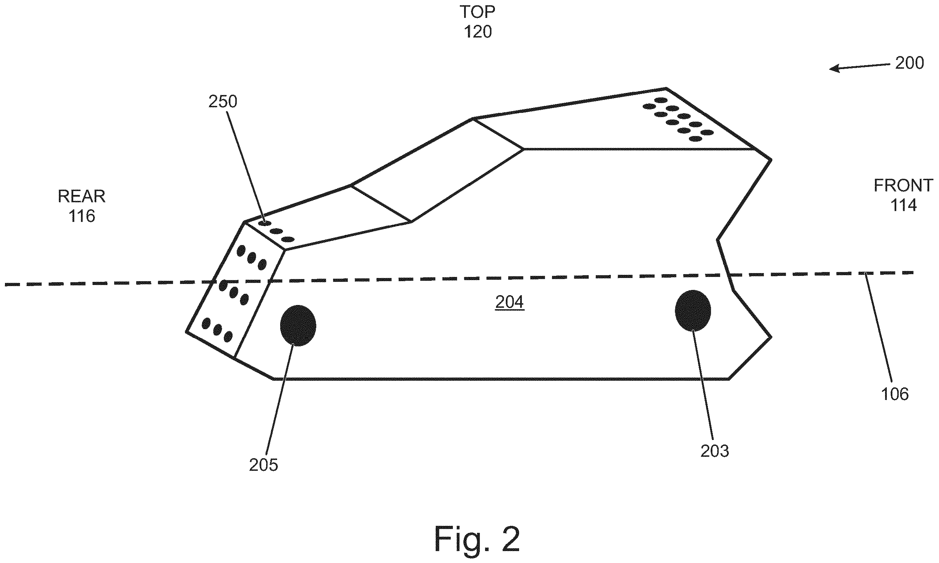

In an embodiment, such as that illustrated in Figure 1 and indeed in the embodiments illustrated in Figures 2 to 7, the battery module housing 200 is both a body of the vehicle and a chassis or frame of the vehicle. In other embodiments, the battery module housing 200 may be only one of a body or a chassis or frame of a vehicle. In some embodiments, the battery module housing 200 comprises a metal or metal alloy, such as aluminium, or an aluminium alloy. In some embodiments, the battery module housing 200 comprises a composite material, such as carbon fibre reinforced epoxy resin.

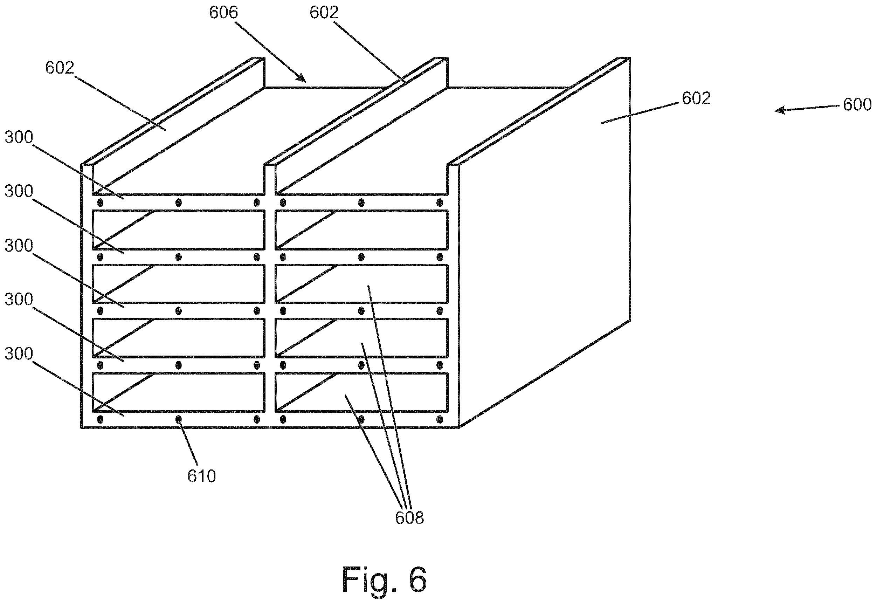

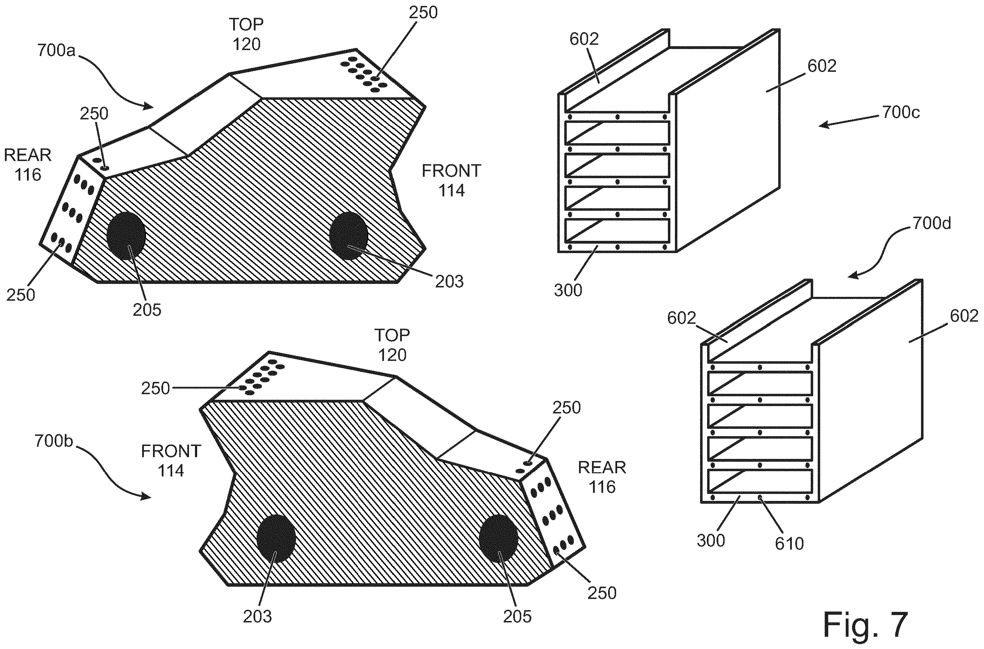

The battery module housing 200 comprises a monocoque 204 and a shelving matrix (shown in detail in Figures 6 and 7). As used herein, the term shelving matrix means a component comprising one or more shelves for receiving said energy storage means thereon. The shelving matrix may comprise only a single shelf or may comprise multiple shelves. The shelving matrix may comprise one or more partitions that divide the one or more shelves into sections. The one or more partitions may be substantially perpendicular to said one or more shelves. In other embodiments, the shelving matrix may comprise no partitions. The monocoque 204 functions as a structural shell of the battery module housing 200, for carrying loads, including at least tensile and compressive loads. In the embodiments illustrated in Figures 1 to 7, monocoque 204 provides both a frame function and a body function of the vehicle 100. In other words, monocoque 204 is an integral chassis-body component of the vehicle 100. The shelving matrix may be integrally formed with the monocoque 204. In some embodiments, the monocoque comprises one or both of a metal/metal alloy, such as fabricated aluminium and a composite material, such as carbon fibre reinforced resin.

The monocoque 204 may comprises any one of a variety of shapes. In the embodiments illustrated in Figures 1 to 7, the monocoque 204 comprises a three dimensional (3D) polygon, having a number of straight edges and flat faces. However in some embodiments, the monocoque 204 may comprise one or both of curved edges and curved faces. In some embodiments, the monocoque 204 may comprise one or both of: a mixture of curved and straight edges and a mixture of flat and curved faces. Indeed, it will be appreciated that straight edges and flat faces are not essential features of the monocoque 204.

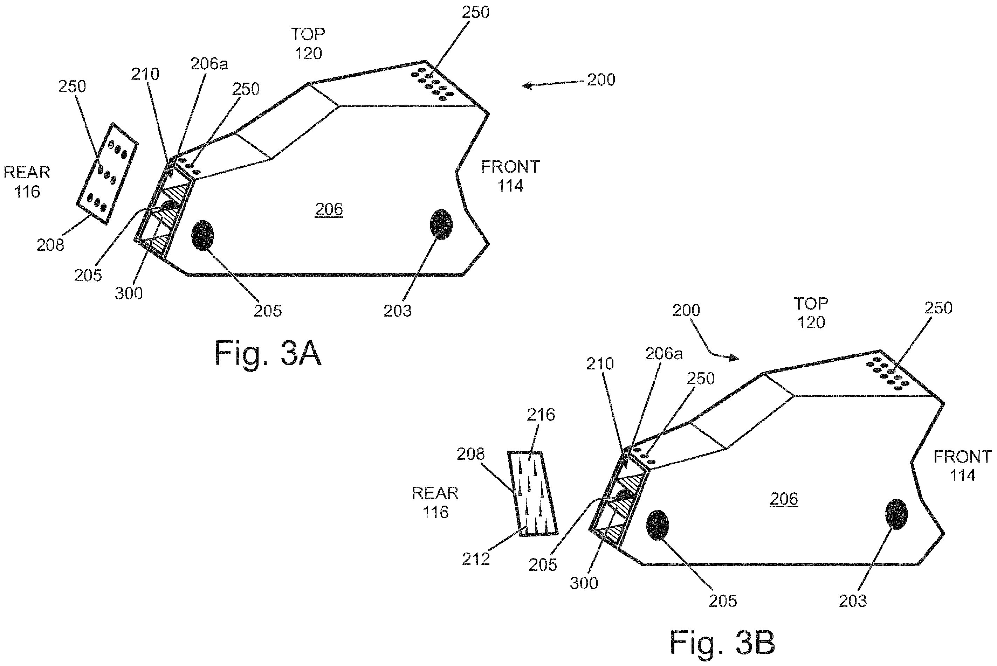

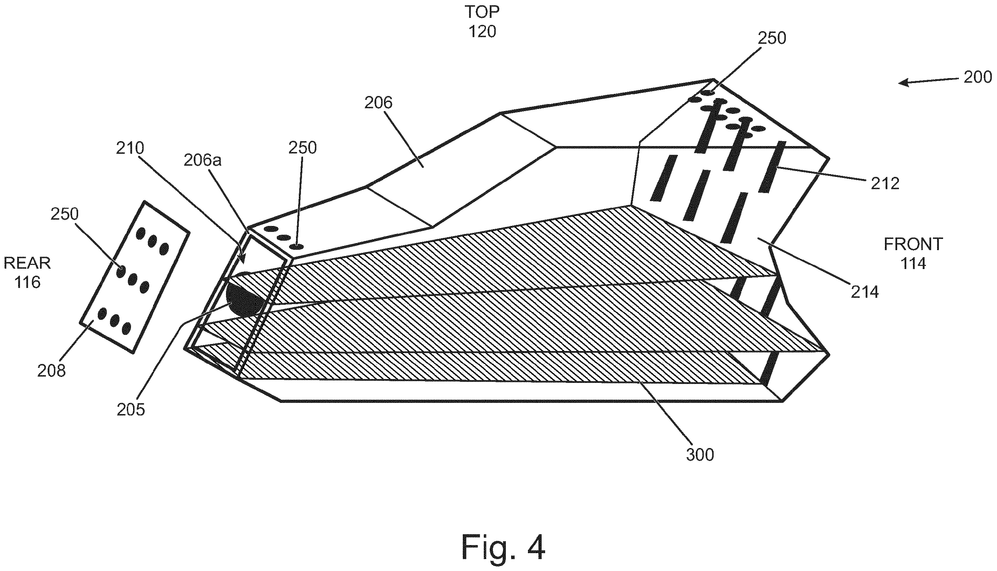

In some embodiments, as illustrated in Figures 3A to 3E and Figure 4, the monocoque 204 comprises a body component 206 and a cover plate 208. The body component 206 may be a unitary, integrally formed component. The cover plate 208 may be a removable cover plate. The body component may be substantially hollow to define an internal portion, chamber or cavity therein. In some embodiments, the body component 206 comprises an opening 210, which opening is closeable by the cover plate 208, which may be releasably secured to the body component 206 by means of screws, an adhesive, or other fastening means. In some embodiments, body component 206 comprises a ledge 206a for receiving the cover plate 208. Ledge 206a may be provided around at least a part of a perimeter of the opening 210. Ledge 206a may slightly within the body component 206, so that when the cover plate 208 is received on the ledge 206a, the cover plate 208 is substantially flush with an outer face or outer faces of the body component 206. A sealing member (not shown) may be provided between the removable cover plate 208 and the ledge 206a, arranged to provide, when the cover plate is secured to the monocoque, an effective seal against the ingress of dirt or water from the road or other surface on which the vehicle is operating and the interior of the monocoque 204. The sealing member may be formed from EPDM, PU or other suitable elastomer. The cover plate 208 enables access to an interior portion of the monocoque 204 and to the shelving matrix therein. This allows energy storage means received by the shelving matrix to easily be inserted, removed, replaced or serviced as required.

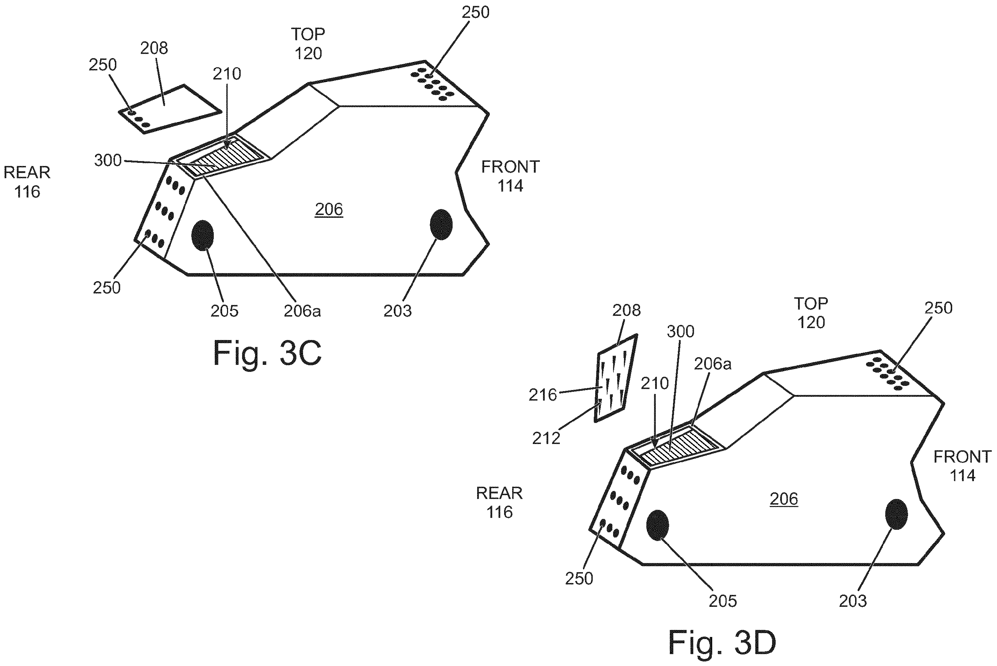

With reference to Figures 3A and 3B, said opening 210 of the body component 206 may be located at a rear 116 of the battery module housing 200, so that when the body component 206 of the monocoque 204 is closed by the cover plate 208, the cover plate 208 is positioned at a rear surface of the monocoque 204. In some embodiments, as illustrated by Figures 3C and 3D, said opening 210 of the body component 206 may be located at a top 120 of the battery module housing 200, so that when the body component 206 of the monocoque 204 is closed by the cover plate 208, the cover plate 208 is positioned at a top surface of the monocoque 204. In some embodiments, as illustrated by Figure 3E, said opening 210 of the body component 206 may be located at a side of the battery module housing 200, so that when the body component 206 of the monocoque 204 is closed by the cover plate 208, the cover plate 208 is positioned at a side surface of the monocoque 204. In an embodiment (not shown), the monocoque 206 may further comprise a separate, storage volume for storing of items such as gloves, keys, sunglasses, wallet, tools or the like as may be useful to the vehicle user. This storage volume is accessible via a lockable cover plate, hinged to the monocoque and located in an upper surface of the monocoque so as to be conveniently accessible to the vehicle user.

In some embodiments, at least one internal face of the monocoque 204 comprises one or more busbars 212 for providing an electrical terminal for said energy storage means. The one or more busbars 212 may comprise any one or more of: a flat strip, a solid bar, a solid rod, a hollow tube and a braided wire. In some embodiments, an internal face on each of a pair of ends, which ends may be opposing ends, each comprise one or more busbars 212 for providing an electrical terminal for said energy storage means. In the embodiment illustrated in Figures 3A, 3B and Figure 4, a front internal face 214 at a front 114 end of the monocoque 204 comprises a plurality of busbars 212 and cover plate 208 closes the body component 206 of the monocoque 204 at a substantially opposite, rear 116 end of the monocoque 204. As illustrated in Figure 3B, a face 216 of cover plate 208 also comprises a plurality of busbars 212. In use, when the body component 206 is closed by the cover plate 208 and the cover plate is fastened in place, a clamping force is exerted by the cover plate on the energy storage means contacting and extending between both the busbars 212 on face 214 and the busbars 212 on face 216. This results in a good electrical connection and sealing of the internal volume of the body component 206.

In addition to a monocoque 204, battery module housing 200 comprises a shelving matrix within the monocoque 204. In some embodiments, the shelving matrix comprises one or both of a metal/metal alloy, such as fabricated aluminium and a composite material, such as carbon fibre reinforced resin. The shelving matrix may provide additional structural support to the monocoque 204. The shelving matrix is arranged to receive an energy storage means, which may, in some embodiments, be a string of cells. The energy storage means may occupy more than one shelf of the shelving matrix. The energy storage means may occupy substantially all of the shelves of the shelving matrix. The energy storage means may occupy only a part of a shelf of the shelving matrix. The shelving matrix may support and retain the energy storage means within the battery module housing 200. The shelving matrix may comprise shock absorbing means so as to protect the energy storage means received by the shelving matrix from damage, such as due to impact to the vehicle. Shock absorbing means may be provided in the form of padding or cladding on the shelving matrix. Additionally or alternatively, shock absorbing means may be provided in the form of deformable support elements (not shown), positioned between the shelving matrix and the monocoque 204. These deformable elements are configured to be replaceable sacrificial mounting elements that, in the event of a vehicle impact, deform, allowing a small amount of relative movement between the shelving matrix and the monocoque, absorbing energy in the process of deformation. In other embodiments, shock absorbing means may be provided by the monocoque 204, such as padding or cladding on an internal face or faces of the monocoque. The shelving matrix comprises one or more shelves 300, as illustrated in Figures 3A to 3E and Figure 4. The shelves 300 of the shelving matrix may be substantially parallel. The shelves 300 of the shelving matrix may extend substantially across a plane of the monocoque 204, from a first, front 114 end of the monocoque 204, to a second, rear 116 end of the monocoque, as illustrated in Figure 4.

In some embodiments, the shelving matrix may comprise a lattice structure of shelves 300 and walls or partitions. With reference to Figure 6, in some embodiments, shelving matrix 600 comprises one or more shelves 300 and one or more sidewalls 602. The sidewalls 602 may be substantially parallel to each other. The one or more sidewalls 602 may be substantially perpendicular to the one or more shelves 300, so as to define one or more open topped compartments 606 of the shelving matrix 600. Where more than one shelf 300 is provided, the shelves may be substantially parallel to one another, as illustrated by Figure 6, to define one or more additional compartments 608. The compartments 606, 608 may be distributed in a grid like pattern.

In some embodiments, the shelving matrix 600 may comprise one or more clearance zones. A clearance zone may provide clearance to separate the energy storage means from one or both of the front and rear connection means, which in some embodiments, comprise through apertures 203, 205, and are arranged to provide mounting means for the front and rear suspension assemblies respectively.

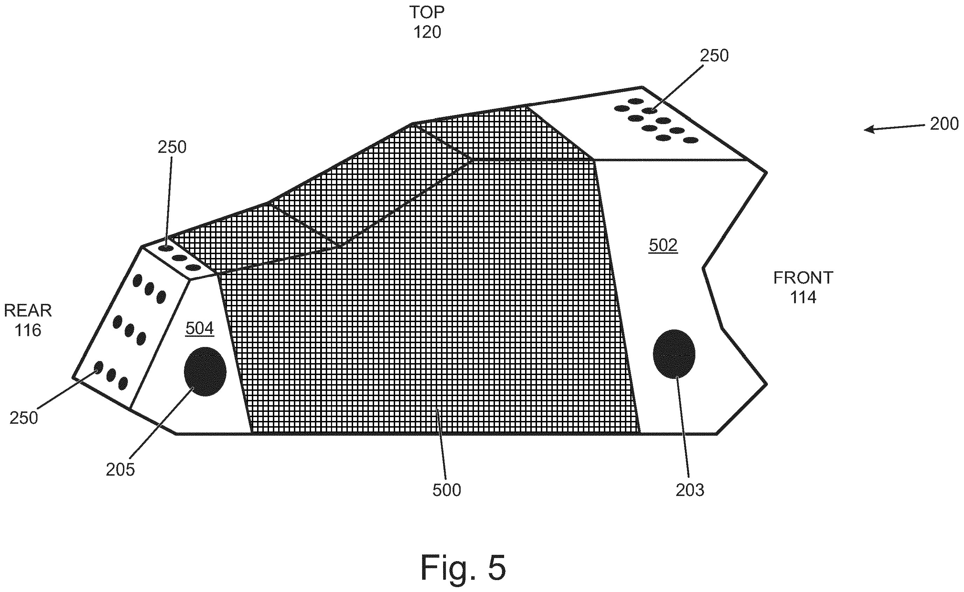

With reference to Figure 5, in some embodiments, the shelving matrix may only extend throughout an area 500 within the monocoque, as indicated by the hatched region of the monocoque 204 of Figure 5. The shelving matrix does not extend into the front and rear clearance zones 502, 504 provided at the front 114 and rear 116 of the battery module housing 200, respectively. Front and rear clearance zones 502, 504 therefore enable substantially unimpeded connection of front and rear wheel assemblies to the battery module housing 200 via front and rear connection means, which may be, in some embodiments, through apertures 203, 205, respectively. The front and rear clearance zones 502, 504 therefore may be arranged to provide sacrificial crumple zones to further protect the shelving matrix 600 and energy storage means in the event of a vehicle impact.

The front suspension assembly may comprise a headstock or headtube (not shown). The front suspension assembly may include a steering assembly. The front through aperture 203, may be arranged to receive the headstock therethrough, or may itself define a headtube through and about which a steering mechanism of the steering assembly of the front suspension assembly may operate. The front and rear clearance zones 502, 504 also enable an energy storage means to be distributed on multiple shelves 300 without breaking an electrical connection. The clearance zones 502, 504 may enable a string of cells to be threaded along multiple rows in an S-like pattern.

Referring again to Figure 6, in some embodiments, the shelving matrix 600 comprises at least one cooling means such as a cooling channel 610, as illustrated by Figure 6. The at least one cooling channels 610 may comprise a through cavity.

The at least one cooling channel 610 may be integral with the shelving matrix, such as formed within one or both of a side wall 602 and a shelf 300, such as illustrated by Figures 3A to 3E and Figure 4. The at least one cooling channels 610 may be coaxial with a shelf 300 in which it is integrally formed within. In some embodiments, the monocoque 204 comprises at least one aperture 250 for providing fluid communication between the at least one cooling channel 610 and an environment external to the monocoque 204. A first of such apertures 250 may be provided substantially at the front 114 of the monocoque 204 and a second of such apertures 250 may be provided substantially at a rear 116 of the monocoque 204. In some embodiments, as illustrated in Figures 2, 3A to 3D, 4 and 5, a plurality of such apertures 250 are provided substantially at the front 114 of the monocoque 204 and a plurality of apertures 250 are provided substantially at the rear 116 of the monocoque 204. In this way, air can flow from an environment external to the vehicle, through the aperture or apertures 250 substantially at the front 114 of the monocoque 204, into the monocoque 204, through at least one of the at least one cooling channels 610 and through the aperture or apertures 250 substantially at the rear 116 of the monocoque 204, to the external environment, thereby cooling contents within the battery module housing 200. This may be especially advantageous in extended and/or heavy operating conditions. It is envisaged that excess heat is transferred away from the energy storage means via thermally conductive surfaces or elements in the shelves 300 and that the shelves are cooled whilst the energy storage means are substantially sealed within their compartments 606, 608, so that they cannot become contaminated by dust or water entrained in the cooling air. This is especially advantageous where the vehicle is being operated in areas of relatively high ambient temperatures and where conditions are wet or dusty.

In an alternative embodiment (not shown), the battery module housing 200 further comprises a battery cooling pack having a heat exchanger supported on an external surface of the monocoque 204. The cooling pack contains a coolant (which may be a liquid or gas) in fluid communication between the heat exchanger and the cooling channels 610 and is configured to convey excess heat away from the energy storage means in use. In an example, the battery cooling pack comprises a heat exchanger and a fan arranged to force cooling air through the heat exchanger and the monocoque 204 has external formations in the form of a partial or complete duct or cowl, arranged to support the heat exchanger and the fan and provide a cowling therefor to guide air from the fan through the heat exchanger so as to maximise cooling pack performance.

The vehicle 100 comprises suspension assemblies arranged to support the weight of the vehicle and user and to permit a range of relative movement between the vehicle and the aforementioned wheel, track and/or ski. These suspension assemblies comprise attachment means for securing the suspension assembly to the monocoque 204 and, distal from the attachment means, are provided with mounting means to which are mounted the wheel, track or ski as may be desired. Between the mounting means and the monocoque is provided a spring-damper assembly arranged to provide controlled relative movement between the vehicle and the mounting means. The spring-damper assembly provide the vehicle with vertical damping means 900 (as shown in Figures 1 and 3E) for providing damping along a substantially vertical axis (not shown).

However, for some arrangements of vehicle 100, especially those with only two wheels, the user will lean the vehicle 100 whilst cornering. During cornering, these vehicles may approach an orientation in which a lateral axis 350 of the vehicle, such as illustrated by Figure 3E, approaches an orientation almost perpendicular to a driving surface on which the vehicle is operating. In those scenarios, the effectiveness of vertical damping means 900 can be diminished and another solution is required. In some embodiments, the battery module housing 200 comprises lateral damping control means for controlling damping when the vehicle is cornering. The lateral damping control means may control damping along the lateral axis 350. As described above, battery module housing 200 is a primary load bearing structural component of the vehicle 100 and, in some embodiments, controls flexion and torsion in one or more directions. The monocoque 204 is therefore, in some embodiments, adapted to control lateral flexion. In some embodiments, being adapted comprises the monocoque having one or both of a shape and one or more mechanical properties being arranged to control to permit lateral flexion within a desired range. Appropriate battery module housing 200 geometry to provide sufficient mechanical properties to at least enable the battery module housing 200 to function as a lateral damping control means of the vehicle 100 may be determined using finite element analysis (FEA) or other mathematical and/or computational modelling techniques. In some embodiments, said battery module housing 200 may be formed in any three dimensional shape. The battery modular housing 200 may be adapted to maintain lateral flexion within a desired range of lateral flexion and with desired dynamic response characteristics, regardless of the shape of the battery module housing 200. This may instead be achieved by appropriate material selection. Said battery module housing 200 may be adapted to withstand a variety of twisting forces, regardless of the shape of said monocoque. This may instead be achieved by appropriate material selection. The battery module housing 200 may be formed by a modular construction.

To manufacture the battery module housing 200, the monocoque 204 and shelving matrix 600 may be manufactured concurrently. In some embodiments, the monocoque 204 and the shelving matrix 600 are independently manufactured and the shelving matrix 600 is then fitted within the monocoque 204. In some embodiments, such as that illustrated in Figure 7, the shelving matrix 600 may comprise a first shelving matrix part 700c and a second shelving matrix part 700d. The first and second shelving matrix parts 700c, 700d may be fitted together to form the shelving matrix 600. The first and second shelving matrix parts 700c, 700d may be fitted together by a variety of methods, such as by an adhesive, by soldering or welding, by fastening means such as screws, or by a mechanical connection, such as lugs and detents formed in adjoining shelving matrix parts 700c, 700d. One or more cooling channels may be formed in the shelving matrix 600, by a method such as a gas forming technique.

The shelving matrix 600 may be retained within the monocoque 204 by bonding the shelving matrix 600 to an internal wall of the monocoque 204. This may be achieved using an adhesive or bonding webbing, or another suitable method for bonding components together, such as soldering or welding. Alternatively, the shelving matrix 600 may be retained within the monocoque 204 by a mechanical connection, such as an internal lug or lugs protruding from an internal wall of the monocoque 204 for engaging with one or more edges of the shelving matrix 600. The one or more edges of the shelving matrix 600 may be an edge of a shelf 300. In some embodiments, the one or more edges of the shelving matrix may be provided with an auxiliary extension or accessory, such as lugs, detents or clips, for engaging the internal lug or lugs protruding from the internal wall of the monocoque 204.

In some embodiments, monocoque 204 comprises a first clamshell part 700a and a second clamshell part 700b. To assemble the battery module housing 200, a shelving matrix 600 may be fitted to one of the clamshell parts 700a, 700b. The other of the clamshell parts 700a, 700b may then be fitted to the first of the clamshell parts, over and around the shelving matrix 600, thereby enclosing the shelving matrix 600 within the monocoque 204. The first and second clamshell parts 700a, 700b may be fitted together by a variety of methods, such as by an adhesive, by soldering or welding, by fastening means such as screws, by a mechanical connection, or by any combination of these methods. When the two clamshell parts 700a, 700b are fitted together a seal is formed between the two clamshell parts to prevent ingress of dirt and or water into the battery module housing 200.

In some embodiments, monocoque 204 comprises a first clamshell part 700a and a second clamshell part 700b. To assemble the battery module housing 200, a first part of the shelving matrix 600 may be fitted to the first clamshell part 700a and a second part of the shelving matrix 600 may be fitted to the second clamshell part 700b. The first and second clamshell parts may then be brought together and secured. The first and second clamshell parts 700a, 700b and the first and second parts of the shelving matrix 600 may be fitted together by a variety of methods, such as by a pressed connection fitting, an adhesive, by soldering or welding, by fastening means such as screws, by a mechanical connection, or by any combination of these methods.

In some embodiments, one or both of the monocoque 204 and the shelving matrix 600 comprise a composite material such as carbon fibre reinforced resin. In those embodiments, the monocoque 204 and/or the shelving matrix 600 may be formed by any of: bladder moulding, compression moulding, autoclave moulding, mandrel wrapping, wet layup, chopper gun forming, filament winding, pultrusion and resin infusion.

In some embodiments, one or both of the monocoque 204 and the shelving matrix 600 are manufactured by 3D printing, such as stereolithography (SLA), selective laser sintering (SLS), fused deposition modelling (FDM), electron beam melting (EMB), selective laser melting (SLM) or digital light processing (DLP).

The claims should not be construed to cover merely the foregoing embodiments, but also any embodiments which fall within the scope of the claims.

## Claims

1. A battery module housing (200) for an electric vehicle (100), comprising:
a monocoque (204); and
a shelving matrix (600) within the monocoque (204), the shelving matrix (600) for receiving an energy storage means,
wherein the monocoque (204) is a structural component of the electric vehicle (100),
**characterised in that**:
the monocoque (204) comprises a rear connection means (205) for receiving a rear suspension assembly and a front connection means (203) for receiving a front suspension assembly;
the rear suspension assembly comprises a rear swing arm (112) and a spring-damper assembly arranged between the rear swing arm (112) and the monocoque (204), and wherein the spring-damper assembly is configured to control the movement of the swing arm (112) relative to the battery module housing (200); and
the front suspension assembly comprises a front swing arm (110) and a spring-damper assembly arranged between the front swing arm (110) and the monocoque (204), and wherein the spring-damper assembly is configured to control the movement of the front suspension assembly relative to the battery module housing (200).

2. The battery module housing (200) of claim 1, wherein the monocoque (204) is one or both of a chassis (or frame) and a body of the vehicle (100).

3. The battery module housing (200) of claim 1 or claim 2, wherein the front suspension assembly comprises a steering assembly and the battery module housing comprises a front through aperture defining a headtube through and about which a steering mechanism of the steering assembly operates.

4. The battery module housing (200) of any preceding claim, wherein said monocoque (204) comprises:
a body component (206); and
a removable cover plate (208),
wherein said body component (206) is a unitary component, closeable by said removable cover plate (208).

5. The battery module housing (200) of claim 4, wherein the removable cover plate (208) is positioned at a side surface of the monocoque (204).

6. The battery module housing (200) of claim 5, wherein the body component (206) and the removable cover plate (208) are arranged to fit together at a top (120) of the monocoque (204).

7. The battery module housing (200) of claim 5 or 6, wherein the body component (206) and the removable cover plate (208) are arranged to fit together at a rear (116) of the monocoque (204).

8. The battery module housing (200) of any of claims 4 to 7, wherein said removable cover plate (208) comprises at least one busbar (212) for providing an electrical terminal for said energy storage means.

9. The battery module housing (200) of any preceding claim, wherein said shelving matrix (600) comprises at least one shelf (300) for providing a partition to define a compartment (606, 608) either side thereof, within the monocoque (204).

10. The battery module housing (200) of claim 9, comprising a clearance zone (502, 504) at one or more ends of each at least one shelf (300).

11. The battery module housing (200) of any preceding claim, wherein said shelving matrix (600) is integrally formed with said monocoque (204).

12. The battery module housing (200) of any preceding claim comprising at least one cooling channel (610).

13. The battery module housing (200) of claim 12, wherein said at least one cooling channel (610) is formed within one or both of said monocoque (204) and said shelving matrix (600).

14. The battery module housing (200) of claim 13, wherein said at least one cooling channel (610) comprises a cavity formed in a shelf (300) of said shelving matrix (600).

15. The battery module housing (200) of any of claims 12 to 14, wherein said monocoque (204) comprises at least one aperture (250) for providing fluid communication between said at least one cooling channel (610) and an environment external the monocoque (204).

16. The battery module housing (200) of claim 15, wherein a first of said at least one aperture (250) is arranged at a front (114) of the monocoque (204) and a second of said at least one aperture (250) is provided at a rear (116) of the monocoque (204).

17. The battery module housing (200) of according to any of claims 12 to 16, having a cooling pack, the cooling pack comprising: a heat exchanger, containing a coolant in fluid communication with the at least one cooling channel (610); and a fan arranged to force air through the heat exchanger to facilitate the removal of heat from the coolant, and wherein the cooling pack is mounted to exterior formations provided on the monocoque (204) and those exterior formations form at least a part of a cowling around the heat exchanger and the fan, the cowling being arranged to duct air from the fan through the heat exchanger.

18. The battery module housing (200) of any preceding claim, comprising lateral damping control means for providing suspension when the vehicle (100) is cornering.

19. The battery module housing (200) of claim 18, wherein said lateral damping control means comprises said monocoque (204) having one or both of a shape and one or more mechanical properties being arranged to control lateral flexion.

20. The battery module housing (200) of any preceding claim, wherein said monocoque (204) comprises a composite material.

21. The battery module housing (200) of any preceding claim, wherein said shelving matrix (600) comprises a composite material.

22. The battery module housing (200) of any preceding claim further comprising an energy storage means housed within the battery module housing (200).

23. The battery module housing (200) of any preceding claim, wherein an internal wall of the monocoque (204) and an edge or edges of the shelving matrix (600) comprise cooperative lugs and detents.

24. The battery module housing (200) of any preceding claim, wherein the shelving matrix (600) is retained within the monocoque (204) by means of adhesion.

25. The battery module housing (200) of any of claims 1 to 23, wherein said shelving matrix (600) is retained within the monocoque (204) by means of one or more welded joins.

26. The battery module housing (200) of any preceding claim, wherein one or both of the monocoque (204) and the shelving matrix (600) are manufactured by any one of: bladder moulding, compression moulding, autoclave moulding, mandrel wrapping, wet layup, chopper gun forming, filament winding, pultrusion, resin infusion and 3D printing.

27. The battery module housing (200) of according to any preceding claim, wherein the monocoque (206) further comprises a separate, lockable storage volume, accessible to the user and arranged to permit the user to securely store personal effects, tools and the like, this storage volume is accessible via a lockable cover plate.

28. A vehicle (100) comprising the battery module housing (200) of any of claims 1 to 27.

## Patentansprüche

1. Batteriemodulgehäuse (200) für ein Elektrofahrzeug (100), umfassend:
ein Schalengehäuse (204); und
eine Regalmatrix (600) innerhalb des Schalengehäuses (204), wobei die Regalmatrix (600) zur Aufnahme eines Energiespeichermittels dient,
wobei das Schalengehäuse (204) ein Strukturbauteil des Elektrofahrzeugs (100) ist,
**dadurch gekennzeichnet, dass:**
das Schalengehäuse (204) ein hinteres Verbindungsmittel (205) zur Aufnahme einer hinteren Aufhängungsanordnung und ein vorderes Verbindungsmittel (203) zur Aufnahme einer vorderen Aufhängungsanordnung umfasst;
die hintere Aufhängungsanordnung einen hinteren Schwingarm (112) und eine Feder-Dämpfer-Anordnung umfasst, die zwischen dem hinteren Schwingarm (112) und dem Schalengehäuse (204) angeordnet ist, und wobei die Feder-Dämpfer-Anordnung so konfiguriert ist, dass sie die Bewegung des Schwingarms (112) relativ zu dem Batteriemodulgehäuse (200) steuert; und
die vordere Aufhängungsanordnung einen vorderen Schwingarm (110) und eine Feder-Dämpfer-Anordnung umfasst, die zwischen dem vorderen Schwingarm (110) und dem Schalengehäuse (204) angeordnet ist, und wobei die Feder-Dämpfer-Anordnung so konfiguriert ist, dass sie die Bewegung der vorderen Aufhängungsanordnung relativ zu dem Batteriemodulgehäuse (200) steuert.

2. Batteriemodulgehäuse (200) nach Anspruch 1, wobei das Schalengehäuse (204) eines oder beides von einem Fahrgestell (oder Rahmen) und einer Karosserie des Fahrzeugs (100) ist.

3. Batteriemodulgehäuse (200) nach Anspruch 1 oder Anspruch 2, wobei die vordere Aufhängungsanordnung eine Lenkanordnung umfasst und das Batteriemodulgehäuse eine vordere Durchgangsöffnung umfasst, die ein Steuerrohr definiert, durch das und um das ein Lenkmechanismus der Lenkanordnung arbeitet.

4. Batteriemodulgehäuse (200) nach einem der vorhergehenden Ansprüche, wobei das Schalengehäuse (204) umfasst:
ein Karosseriebauteil (206); und
eine abnehmbare Abdeckplatte (208),
wobei das Körperbauteil (206) ein einheitliches Bauteil ist, das durch die abnehmbare Abdeckplatte (208) verschließbar ist.

5. Batteriemodulgehäuse (200) nach Anspruch 4, wobei die abnehmbare Abdeckplatte (208) an einer Seitenfläche des Schalengehäuses (204) angeordnet ist.

6. Batteriemodulgehäuse (200) nach Anspruch 5, wobei das Körperbauteil (206) und die abnehmbare Abdeckplatte (208) so angeordnet sind, dass sie an einer Oberseite (120) des Schalengehäuses (204) zusammenpassen.

7. Batteriemodulgehäuse (200) nach Anspruch 5 oder 6, wobei das Körperbauteil (206) und die abnehmbare Abdeckplatte (208) so angeordnet sind, dass sie an einer Rückseite (116) des Schalengehäuses (204) zusammenpassen.

8. Batteriemodulgehäuse (200) nach einem der Ansprüche 4 bis 7, wobei die abnehmbare Abdeckplatte (208) mindestens eine Sammelschiene (212) zum Bereitstellen eines elektrischen Anschlusses für das Energiespeichermittel umfasst.

9. Batteriemodulgehäuse (200) nach einem der vorhergehenden Ansprüche, wobei die Regalmatrix (600) mindestens ein Regal (300) zum Bereitstellen einer Trennwand umfasst, um ein Fach (606, 608) auf jeder Seite davon innerhalb des Schalengehäuses (204) zu definieren.

10. Batteriemodulgehäuse (200) nach Anspruch 9, umfassend eine Freiraumzone (502, 504) an einem oder mehreren Enden jedes mindestens einen Regals (300).

11. Batteriemodulgehäuse (200) nach einem der vorhergehenden Ansprüche, wobei die Regalmatrix (600) einstückig mit dem Schalengehäuse (204) ausgebildet ist.

12. Batteriemodulgehäuse (200) nach einem der vorhergehenden Ansprüche, umfassend mindestens einen Kühlkanal (610).

13. Batteriemodulgehäuse (200) nach Anspruch 12, wobei der mindestens eine Kühlkanal (610) innerhalb von einem oder beiden des Schalengehäuses (204) und der Regalmatrix (600) ausgebildet ist.

14. Batteriemodulgehäuse (200) nach Anspruch 13, wobei der mindestens eine Kühlkanal (610) einen Hohlraum umfasst, der in einem Regal (300) der Regalmatrix (600) gebildet ist.

15. Batteriemodulgehäuse (200) nach einem der Ansprüche 12 bis 14, wobei das Schalengehäuse (204) mindestens eine Öffnung (250) zum Bereitstellen einer Fluidverbindung zwischen dem mindestens einen Kühlkanal (610) und einer Umgebung außerhalb des Schalengehäuses (204) umfasst.

16. Batteriemodulgehäuse (200) nach Anspruch 15, wobei eine erste der mindestens einen Öffnung (250) an einer Vorderseite (114) des Schalengehäuses (204) angeordnet ist und eine zweite der mindestens einen Öffnung (250) an einer Rückseite (116) des Schalengehäuses (204) vorgesehen ist.

17. Batteriemodulgehäuse (200) nach einem der Ansprüche 12 bis 16, aufweisend ein Kühlpaket, wobei das Kühlpaket umfasst: einen Wärmetauscher, der ein Kühlmittel enthält, das mit dem mindestens einen Kühlkanal (610) in Fluidverbindung steht; und ein Gebläse, das so angeordnet ist, dass es Luft durch den Wärmetauscher drückt, um die Ableitung von Wärme aus dem Kühlmittel zu erleichtern, und wobei das Kühlpaket an äußeren Formationen angebracht ist, die an dem Schalengehäuse (204) vorgesehen sind, und diese äußeren Formationen mindestens einen Teil einer Verkleidung um den Wärmetauscher und das Gebläse herum bilden, wobei die Verkleidung so angeordnet ist, dass sie Luft von dem Gebläse durch den Wärmetauscher leitet.

18. Batteriemodulgehäuse (200) nach einem der vorhergehenden Ansprüche, das seitliche Dämpfungssteuermittel umfasst, um für Federung zu sorgen, wenn das Fahrzeug (100) in eine Kurve fährt.

19. Batteriemodulgehäuse (200) nach Anspruch 18, wobei das seitliche Dämpfungssteuermittel das Schalengehäuse (204) umfasst, das eine oder beides von einer Form und einer oder mehreren mechanischen Eigenschaften aufweist, die so angeordnet sind, dass sie die seitliche Biegung steuern.

20. Batteriemodulgehäuse (200) nach einem der vorhergehenden Ansprüche, wobei das Schalengehäuse (204) ein Verbundmaterial umfasst.

21. Batteriemodulgehäuse (200) nach einem der vorhergehenden Ansprüche, wobei die Regalmatrix (600) ein Verbundmaterial umfasst.

22. Batteriemodulgehäuse (200) nach einem der vorhergehenden Ansprüche, ferner umfassend ein Energiespeichermittel, das im Batteriemodulgehäuse (200) untergebracht ist.

23. Batteriemodulgehäuse (200) nach einem der vorhergehenden Ansprüche, wobei eine Innenwand des Schalengehäuses (204) und eine oder mehrere Kanten der Regalmatrix (600) zusammenwirkende Nasen und Rasten umfassen.

24. Batteriemodulgehäuse (200) nach einem der vorhergehenden Ansprüche, wobei die Regalmatrix (600) innerhalb des Schalengehäuses (204) durch Klebung gehalten wird.

25. Batteriemodulgehäuse (200) nach einem der Ansprüche 1 bis 23, wobei die Regalmatrix (600) innerhalb des Schalengehäuses (204) durch eine oder mehrere Schweißnähte gehalten wird.

26. Batteriemodulgehäuse (200) nach einem der vorhergehenden Ansprüche, wobei eines oder beides von dem Schalengehäuse (204) und der Regalmatrix (600), durch eines der folgenden Verfahren hergestellt werden: Blasformen, Formpressen, Autoklavformen, Dornwickeln, Nassauflegen, Chopper-Gun-Formen, Filamentwickeln, Pultrusion, Harzinfusion und 3D-Druck.

27. Batteriemodulgehäuse (200) nach einem der vorhergehenden Ansprüche, wobei das Schalengehäuse (206) ferner einen separaten, verschließbaren Stauraum umfasst, der dem Benutzer zugänglich ist und so angeordnet ist, dass der Benutzer persönliche Gegenstände, Werkzeuge und dergleichen sicher aufbewahren kann, wobei dieser Stauraum über eine verschließbare Abdeckplatte zugänglich ist.

28. Fahrzeug (100) umfassend das Batteriemodulgehäuse (200) nach einem der Ansprüche 1 bis 27.

## Revendications

1. Logement de module de batterie (200) destiné à un véhicule électrique (100), comprenant :
une monocoque (204) ; et
une matrice de rayonnage (600) au sein de la monocoque (204), la matrice de rayonnage (600) étant destinée à recevoir un moyen de stockage d'énergie,
dans lequel la monocoque (204) est un composant structural du véhicule électrique (100),
**caractérisé en ce que** :
la monocoque (204) comprend un moyen de liaison arrière (205) destiné à recevoir un ensemble suspension arrière et un moyen de liaison avant (203) destiné à recevoir un ensemble suspension avant ;
l'ensemble suspension arrière comprend un bras oscillant arrière (112) et un ensemble ressort-amortisseur agencé entre le bras oscillant arrière (112) et la monocoque (204), et dans lequel l'ensemble ressort-amortisseur est conçu pour commander le mouvement du bras oscillant (112) par rapport au logement de module de batterie (200) ; et
l'ensemble suspension avant comprend un bras oscillant avant (110) et un ensemble ressort-amortisseur agencé entre le bras oscillant avant (110) et la monocoque (204), et dans lequel l'ensemble ressort-amortisseur est conçu pour commander le mouvement de l'ensemble suspension avant par rapport au logement de module de batterie (200).

2. Logement de module de batterie (200) selon la revendication 1, dans lequel la monocoque (204) est l'un et/ou l'autre parmi un châssis (ou cadre) et une carrosserie du véhicule (100).

3. Logement de module de batterie (200) selon la revendication 1 ou la revendication 2, dans lequel l'ensemble suspension avant comprend un ensemble direction et le logement de module de batterie comprend un orifice traversant avant définissant un tube de direction à travers lequel et autour duquel un mécanisme de direction de l'ensemble direction fonctionne.

4. Logement de module de batterie (200) selon l'une quelconque revendication précédente, dans lequel ladite monocoque (204) comprend :
un composant de corps (206) ; et
une plaque de couverture amovible (208),
dans lequel ledit composant de corps (206) est un composant monobloc, pouvant être fermé par ladite plaque de couverture amovible (208).

5. Logement de module de batterie (200) selon la revendication 4, dans lequel la plaque de couverture amovible (208) est positionnée au niveau d'une surface latérale de la monocoque (204).

6. Logement de module de batterie (200) selon la revendication 5, dans lequel le composant de corps (206) et la plaque de couverture amovible (208) sont agencés pour s'associer au niveau d'un sommet (120) de la monocoque (204).

7. Logement de module de batterie (200) selon la revendication 5 ou 6, dans lequel le composant de corps (206) et la plaque de couverture amovible (208) sont agencés pour s'associer au niveau d'un arrière (116) de la monocoque (204).

8. Logement de module de batterie (200) selon l'une quelconque des revendications 4 à 7, dans lequel ladite plaque de couverture amovible (208) comprend au moins une barre omnibus (212) destinée à fournir une borne électrique pour ledit moyen de stockage d'énergie.

9. Logement de module de batterie (200) selon l'une quelconque revendication précédente, dans lequel ladite matrice de rayonnage (600) comprend au moins un rayonnage (300) destiné à fournir une séparation pour définir un compartiment (606, 608) de part et d'autre de celui-ci, au sein de la monocoque (204).

10. Logement de module de batterie (200) selon la revendication 9, comprenant une zone de dégagement (502, 504) au niveau d'une ou plusieurs extrémités de chaque au moins un rayonnage (300).

11. Logement de module de batterie (200) selon l'une quelconque revendication précédente, dans lequel ladite matrice de rayonnage (600) est formée d'un seul tenant avec ladite monocoque (204).

12. Logement de module de batterie (200) selon l'une quelconque revendication précédente comprenant au moins un canal de refroidissement (610).

13. Logement de module de batterie (200) selon la revendication 12, dans lequel ledit au moins un canal de refroidissement (610) est formé au sein de l'une et/ou l'autre parmi ladite monocoque (204) et ladite matrice de rayonnage (600).

14. Logement de module de batterie (200) selon la revendication 13, dans lequel ledit au moins un canal de refroidissement (610) comprend une cavité formée dans un rayonnage (300) de ladite matrice de rayonnage (600).

15. Logement de module de batterie (200) selon l'une quelconque des revendications 12 à 14, dans lequel ladite monocoque (204) comprend au moins un orifice (250) destiné à fournir une communication fluidique entre ledit au moins un canal de refroidissement (610) et un environnement externe à la monocoque (204).

16. Logement de module de batterie (200) selon la revendication 15, dans lequel un premier dudit au moins un orifice (250) est agencé au niveau d'un avant (114) de la monocoque (204) et un second dudit au moins un orifice (250) est fourni au niveau d'un arrière (116) de la monocoque (204).

17. Logement de module de batterie (200) selon l'une quelconque des revendications 12 à 16, ayant un ensemble de refroidissement, l'ensemble de refroidissement comprenant : un échangeur de chaleur, contenant un caloporteur en communication fluidique avec l'au moins un canal de refroidissement (610) ; et un ventilateur agencé pour forcer de l'air à travers l'échangeur de chaleur pour faciliter l'élimination de chaleur du caloporteur, et dans lequel l'ensemble de refroidissement est monté sur des formations extérieures fournies sur la monocoque (204) et ces formations extérieures forment au moins une partie d'un capotage autour de l'échangeur de chaleur et du ventilateur, le capotage étant agencé pour conduire de l'air à partir du ventilateur à travers l'échangeur de chaleur.

18. Logement de module de batterie (200) selon l'une quelconque revendication précédente, comprenant un moyen de commande d'amortissement latéral destiné à fournir une suspension lorsque le véhicule (100) vire.

19. Logement de module de batterie (200) selon la revendication 18, dans lequel ledit moyen de commande d'amortissement latéral comprend ladite monocoque (204) ayant l'une et/ou l'autre parmi une forme et une ou plusieurs propriétés mécaniques étant agencées pour commander une flexion latérale.

20. Logement de module de batterie (200) selon l'une quelconque revendication précédente, dans lequel ladite monocoque (204) comprend un matériau composite.

21. Logement de module de batterie (200) selon l'une quelconque revendication précédente, dans lequel ladite matrice de rayonnage (600) comprend un matériau composite.

22. Logement de module de batterie (200) selon l'une quelconque revendication précédente comprenant en outre un moyen de stockage d'énergie logé au sein du logement de module de batterie (200).

23. Logement de module de batterie (200) selon l'une quelconque revendication précédente, dans lequel une paroi interne de la monocoque (204) et un bord ou des bords de la matrice de rayonnage (600) comprennent des ergots et des crans qui coopèrent.

24. Logement de module de batterie (200) selon l'une quelconque revendication précédente, dans lequel la matrice de rayonnage (600) est retenue au sein de la monocoque (204) au moyen d'une adhésion.

25. Logement de module de batterie (200) selon l'une quelconque des revendications 1 à 23, dans lequel ladite matrice de rayonnage (600) est retenue au sein de la monocoque (204) au moyen d'un ou plusieurs joints soudés.

26. Logement de module de batterie (200) selon l'une quelconque revendication précédente, dans lequel l'une et/ou l'autre parmi la monocoque (204) et la matrice de rayonnage (600) sont fabriquées par l'un quelconque parmi : moulage par vessie, moulage par compression, moulage par autoclave, enroulement sur mandrin, mise en place humide, formage par pistolet hacheur, enroulement de filament, pultrusion, infusion de résine et impression 3D.

27. Logement de module de batterie (200) selon l'une quelconque revendication précédente, dans lequel la monocoque (206) comprend en outre volume de stockage verrouillable indépendant, accessible à l'utilisateur et agencé pour permettre à l'utilisateur de stocker de manière sécurisée des effets personnels, des outils et similaires, ce volume de stockage est accessible par l'intermédiaire d'une plaque de couverture verrouillable.

28. Véhicule (100) comprenant le logement de module de batterie (200) selon l'une quelconque des revendications 1 à 27.
